(19)

Europäisches
Patentamt
European
Patent Office
Office européen
des brevets

(11) **EP 2 343 230 A1**

(12) **EUROPEAN PATENT APPLICATION**

(43) Date of publication:
**13.07.2011 Bulletin 2011/28**

(51) Int Cl.:
**B62D 57/032** (2006.01)

(21) Application number: **11150585.5**

(22) Date of filing: **11.01.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **12.01.2010 KR 20100002582**

(71) Applicant: **Samsung Electronics Co., Ltd.
Gyeonggi-do 442-742 (KR)**

(72) Inventors:
• **Kim, Joo Hyung
Gyeonggi-do (KR)**
• **Roh, Kyung Shik
Gyeonggi-do (KR)**
• **Kwon, Woong
Gyeonggi-do (KR)**
• **Lee, Min Hyung
Gyeonggi-do (KR)**
• **Lee, Ju Suk
Gyeonggi-do (KR)**

(74) Representative: **Land, Addick Adrianus Gosling et
al
Arnold & Siedsma
Sweelinckplein 1
2517 GK Den Haag (NL)**

(54) **Robot and control method thereof**

(57) A robot and a control method thereof may adjust a yaw moment generated from a foot contacting a ground to achieve stable walking of the robot. The robot, which may have an upper body and a lower body, may include a main controller starting walking of the robot through only motions of joints of the lower body and adjusting a motion of the upper body such that a yaw moment generated from a foot the lower body during walking of the robot is less than the maximum static frictional force of a ground to perform stable walking of the robot, and sub controllers driving actuators of the joints according to a control signal of the main controller.

FIG. 4A

EP 2 343 230 A1

**Description**

Embodiments relate to a robot, which keeps balance thereof during walking, and to a control method thereof.

In general, in order to stably control walking of a bipedal robot, methods employing a concept of zero moment point (ZMP) are used. The theory of ZMP was introduced by M. Vukobratovic in the 1960s, and states that a bipedal robot is stabilized by locating a ZMP in a stability region within a support region generated by the outermost area of a contact plane of a foot of the bipedal robot with the ground when the robot walks. Research on stable walking of robots using the concept of ZMP is divided into research on generation of walking trajectories in consideration of robot dynamics and research on balance control compensating for errors of ZMPs.

Various methods to generate walking patterns of robots based on trajectories of ZMPs have been proposed. Through these methods, walking patterns of the robots similar to those of humans are generated, but consideration for the structure of the robots is not sufficient and thus motions of the robots are not sufficiently natural. Most robots which have been disposed up to now calculate ZMPs in consideration of motions of upper bodies thereof from the initial stage in design of walking patterns. If the ZMPs are calculated in advance in consideration of the motions of the upper bodies of the robots, the robots may perform stable walking under a given environment. However, these methods do not consider compensation for a yaw moment generated when a robot walks at a high speed, and thus cause lowering of stability in walking.

Therefore, it is an aspect of the present embodiments to provide a robot and a control method thereof in which a yaw moment generated from a lower body of the robot during walking of the robot is compensated for by a motion of an upper body of the robot.

Additional aspects of the will be set forth in part in the description which follows and, in part, will be obvious from the description, or may be learned by practice of the invention.

In accordance with one aspect of the present embodiments, a control method of a robot having an upper body and a lower body, includes starting walking of the robot through only a motion of the lower body, and adjusting a motion of the upper body such that a yaw moment generated from the lower body during walking of the robot is less than the maximum static frictional force of a ground.

The lower body may include at least two leg units, each of which includes a leg and a foot, and the walking of the robot may be achieved through only the motion of the lower body by operating the at least two leg units. The yaw moment may be a moment of inertia generated from the foot contacting the ground during walking of the robot.

The upper body may include a torso and at least two arm units, each of which includes an arm and a hand, and the yaw moment may be generated by motions of the torso, the at least two arm units, and the leg unit not contacting the ground.

An acceleration of the torso in a walking direction or accelerations of the at least two arm units in the walking direction may be adjusted such that the yaw moment generated during walking of the robot is less than the maximum static frictional force of the ground.

In the adjustment of the accelerations of the at least two arm units such that the yaw moment generated during walking of the robot is less than the maximum static frictional force of the ground, the acceleration of the torso in the walking direction and the acceleration of one of the at least two arm units in the walking direction may be determined in advance, and then the acceleration of the other one of the at least two arm units, the acceleration of which is not determined, may be adjusted such that the yaw moment is less than the maximum static frictional force of the ground.

In the adjustment of the motion of the upper body such that the yaw moment is less than the maximum static frictional force of the ground, the motion of the upper body may be adjusted such that the yaw moment is within a reference range less than the maximum static frictional force of the ground.

In accordance with another aspect of the present invention, a robot, which has an upper body and a lower body, includes a main controller starting walking of the robot through only motions of joints of the lower body, and adjusting a motion of the upper body such that a yaw moment generated from the lower body during walking of the robot is less than the maximum static frictional force of a ground, and sub controllers driving actuators of the joints according to a control signal of the main controller to perform the walking of the robot.

The lower body may include at least two leg units, each of which includes a leg and a foot, and the main controller may adjust the motion of the upper body such that the yaw moment generated from the foot contacting the ground during walking of the robot does not exceed the maximum static frictional force of the ground.

The upper body may include a torso and at least two arm units, each of which includes an arm and a hand, and the main controller may adjust a yaw moment generated from the torso or yaw moments generated from the at least two arm units such that the yaw moment generated from the foot contacting the ground during walking of the robot does not exceed the maximum static frictional force of the ground.

The main controller may adjust the yaw moment generated from the foot contacting the ground by adjusting an acceleration of the torso in a walking direction or accelerations of the at least two arm units in the walking direction.

The main controller may adjust the yaw moment generated from the foot contacting the ground by determining the acceleration of the torso in the walking direction and the acceleration of one of the at least two arm units in the walking direction in advance, and then by adjusting the acceleration of the other one of the at least two arm units, the acceleration of which is not determined.

In accordance with another aspect of the present embodiments, a control method of a robot having an upper body and a lower body, includes starting movement of the robot through a motion of the lower body, and adjusting a motion of the upper body such that a yaw moment generated from the lower body during movement of the robot is less than the maximum static frictional force of the ground.

In accordance with a further aspect of the present embodiments a robot having an upper body and a lower body, includes a main controller to start movement of the robot through motions of joints of the lower body, and to adjust a motion of the upper body such that a yaw moment generated from the lower body during the movement of the robot is less than the maximum static frictional force of a ground, and sub controllers to drive actuators of the joints according to a control signal of the main controller to perform the movement of the robot.

BRIEF DESCRIPTION OF THE DRAWINGS

These and/or other aspects of the invention will become apparent and more readily appreciated from the following description of the embodiments, taken in conjunction with the accompanying drawings of which:

FIG. 1 is a perspective view illustrating an external appearance of a robot in accordance with one embodiment;

FIG. 2 is a view illustrating structures of main joints of the robot of FIG. 1;

FIG. 3 is a block diagram schematically illustrating a control system of the robot of FIG. 1;

FIGS. 4A and 4B are views illustrating yaw moments generated during walking of the robot in accordance with the embodiment; and

FIG. 5 is a flow chart illustrating a process of removing a yaw moment generated from a foot contacting the ground during walking of the robot in accordance with the embodiment.

DETAILED DESCRIPTION

Reference will now be made in detail to the embodiments of the present invention, examples of which are illustrated in the accompanying drawings, wherein like reference numerals refer to like elements throughout.

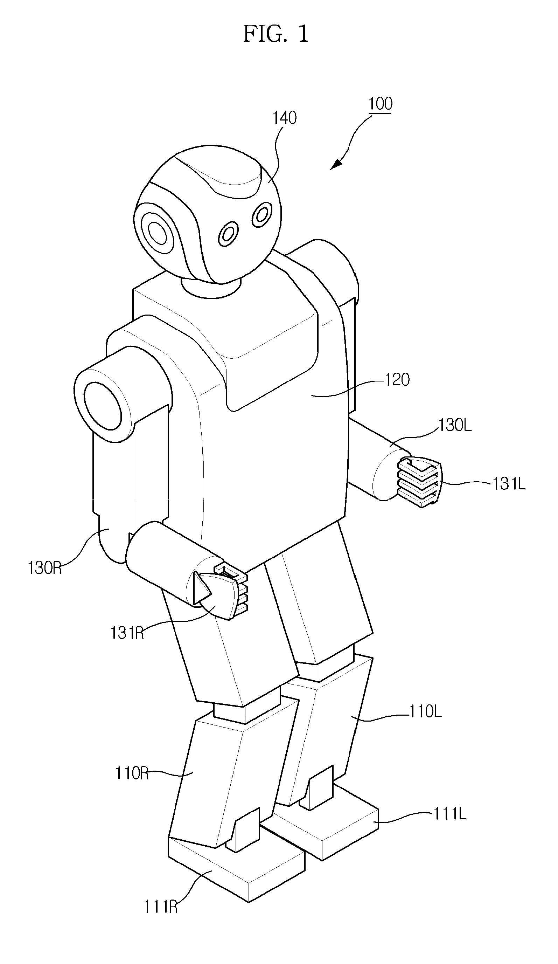

FIG. 1 is a perspective view illustrating an external appearance of a robot 100 in accordance with one embodiment.

A robot 100 in accordance with this embodiment is, for example, a bipedal robot which walks erect through two legs 110R and 110L in the same manner as a human, and may include a torso 120, two arms 130R and 103L and a head 140 connected to an upper portion of the torso 120, and feet 111R and 111L and hands 131R and 131L respectively connected to front ends of the two legs 110R and 110L and the two arms 130R and 130L.

In the embodiment of FIG. 1, R represents the right side of the robot 100, and L represents the left side of the robot 100. Further, COG (center of gravity) represents the center of gravity of the robot 100, ZMP (zero moment point) represents a point at a contact plane of the robot 100 with the ground where the sum of a moment in the roll direction (in a direction of the x-axis, i.e., in a direction of walking (or movement) of the robot 100) and a moment in the pitch direction (in a direction of the y-axis, i.e., in a direction of a stride width of the robot 100) is zero.

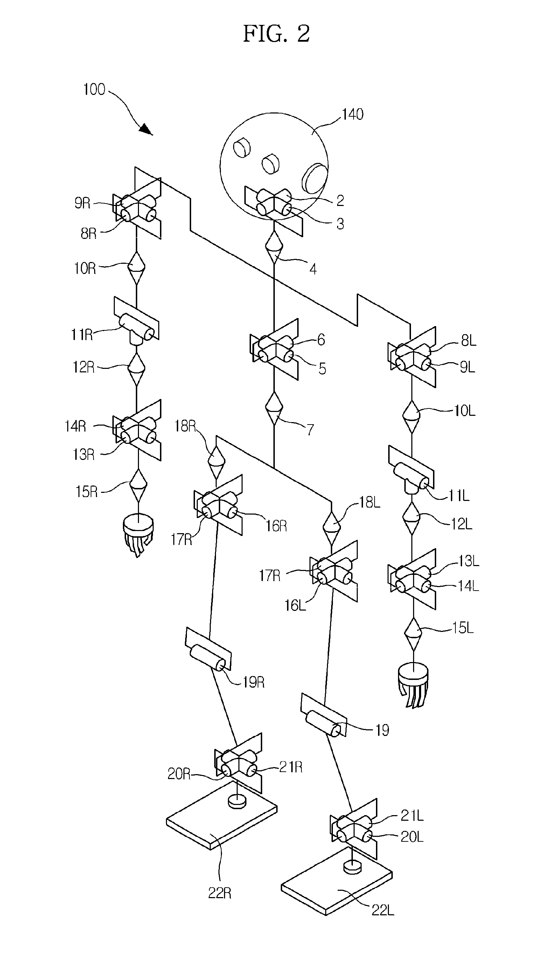

FIG. 2 is a view illustrating structures of main joints of the robot 100 of FIG. 1.

Referring to robot 100, a neck joint supporting the head 140 may include a neck joint roll shaft 2, a neck joint pitch shaft 3, and a neck joint yaw shaft 4, thus being movable in the directions of the x-axis (roll axis), the y-axis (pitch axis), and the z-axis (yaw axis). The two arms 130R and 103L respectively may include shoulder joints, elbow joints, and wrist joints such that portions of the robot 100 corresponding to shoulders, elbows, and wrists of a human are rotatable.

The shoulder joints of the two arms 130R and 130L respectively may include shoulder joint roll shafts 8R and 8L, shoulder joint pitch shafts 9R and 9L, and shoulder joint yaw shafts 10R and 10L, thus being movable in the directions of the x-axis (roll axis), the y-axis (pitch axis), and the z-axis (yaw axis).

The elbow joints of the two arms 130R and 130L respectively may include elbow joint pitch shafts 11R and 11L and elbow joint yaw shafts 12R and 12L, thus being movable in the directions of the y-axis (pitch axis) and the z-axis (yaw axis).

The wrist joints of the two arms 130R and 130L respectively may include wrist joint roll shafts 13R and 13L, wrist joint pitch shafts 14R and 14L, and wrist joint yaw shafts 15R and 15L, thus being movable in the directions of the x-axis (roll axis), the y-axis (pitch axis), and the z-axis (yaw axis).

In the robot 100, the torso 120 may include a torso roll shaft 5, a torso pitch shaft 6, and a torso yaw shaft 7, thus being movable in the directions of the x-axis (roll axis), the y-axis (pitch axis), and the z-axis (yaw axis).

Also in robot 100, the two legs 110R and 110L respectively may include hip joints, knee joints, and ankle joints. The hip joints of the two legs 110R and 110L respectively may include hip joint roll shafts 16R and 16L, hip joint pitch shafts 17R and 17L, and hip joint yaw shafts 18R and 18L, thus being movable in the directions of the x-axis (roll axis), the y-axis (pitch axis), and the z-axis (yaw axis). The knee joints of the two legs 110R and 110L respectively may include knee joint pitch shafts 19R and 19L, thus being movable in the direction of the y-axis (pitch axis). The ankle joints of the two legs 110R and 110L respectively may include ankle joint roll shafts 20R and 20L and ankle joint pitch shafts 21R and 21L, thus being movable in the directions of the x-axis (roll axis) and the y-axis (pitch axis).

Respective degrees of freedom (DOFs) of the above-described humanoid robot 100 may be substantially achieved by actuators, for example. Based on requirements, such as similarity to a natural human shape to the exclusion of excess expansion in appearance, and posture control of an unstable structure, the actuators may be small or lightweight.

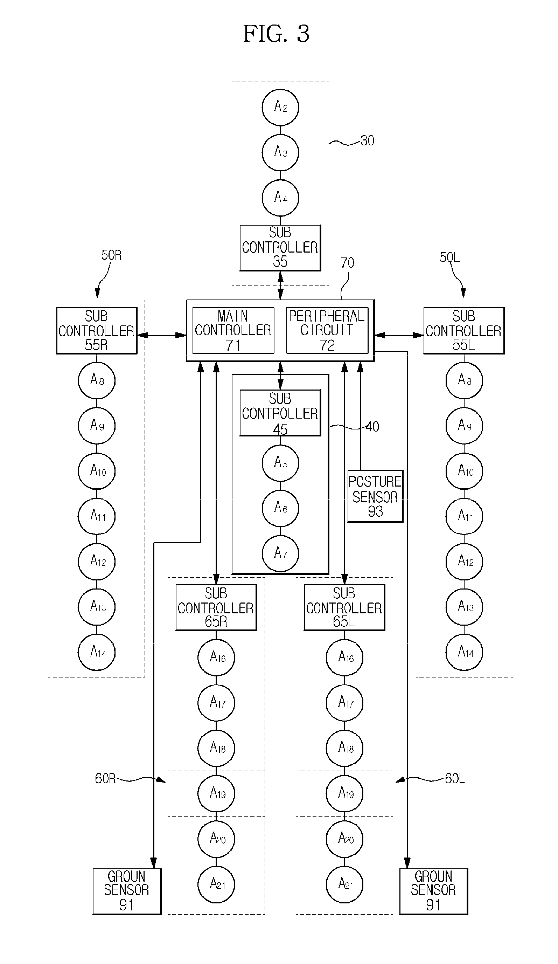

FIG. 3 is a block diagram schematically illustrating a control system of the robot 100 of FIG. 1.

The robot 100 may structural units 30, 40, 50R/L, and 60R/L, and a control unit 70 to control cooperation among the respective structural units 30, 40, 50R/L, and 60R/L. The overall operation of the robot 100 may be generally controlled by the control unit 70. The control unit 70 may include a main controller 71 which may include main circuit components, such as a CPU and a memory, and a peripheral circuit 72 including an interface to transmit and receive data or commands with a power circuit or respective components of the robot 100. The mounting of the control unit 70 in accordance with this embodiment is not limited to a specific place. That is, although FIG. 3 illustrates the control unit 70 is mounted on the torso unit 40, the control unit 70 may be mounted on the head unit 30 or mounted at the outside of the robot 100 such that the control unit 70 may communicate with the robot 100 by wire or wirelessly.

The main controller 71 may dynamically compensate for a control target in response to outputs of respective sensors 91 and 93, and controls sub controllers 35, 45, 55R/L, and 65R/L to drive the head unit 30, the arm units 50R/L, the torso unit 40, and the leg units 60R/L so as to set patterns of whole body motions. The main controller 71 may dynamically compensate for the control target in response to the outputs of the sensors 91 and 93. The main controller 71 may set patterns of a leg motion, a ZMP trajectory, a torso motion, and an arm motion, and transmits commands ordering motions according to the set patterns to the sub controllers 35, 45, 55R/L, and 65R/L.

The sub controllers 35, 45, 55R/L, and 65R/L may be respectively arranged on the head unit 30, the torso unit 40, the arm units 50R/L, and the leg units 60R/L. The sub controllers 35, 45, 55R/L, and 65R/L may analyze the commands transmitted from the main controller 71, and output drive control signals to respective actuators A2, A3, ..., and A21.

The sensors 91 and 93 may include ground sensors 91 installed at soles of feet of the respective leg units 60R/L to detect whether or not the soles of the feet contact the ground, and a posture sensor 93 to detect a posture of the torso unit 40.

The ground sensor 91 may include a proximity sensor or a micro switch, and a state of each of the leg units 60R/L during motion of the robot 100, such as walking or running, is detected by an output of the ground sensor 91.

The posture sensor 93 may include a combination of an acceleration sensor and a gyro sensor, and a tilt angle or a posture of the torso unit 40 is detected by an output of the posture sensor 93.

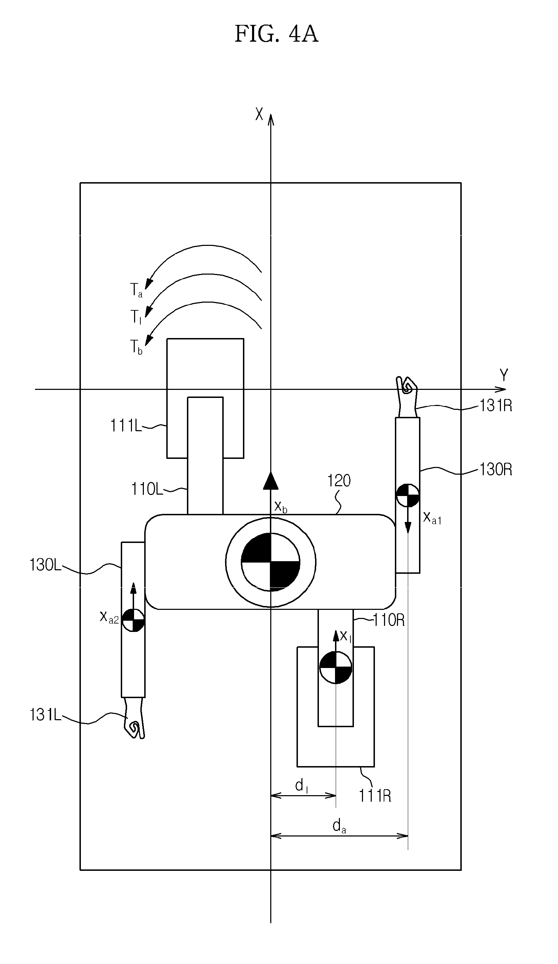

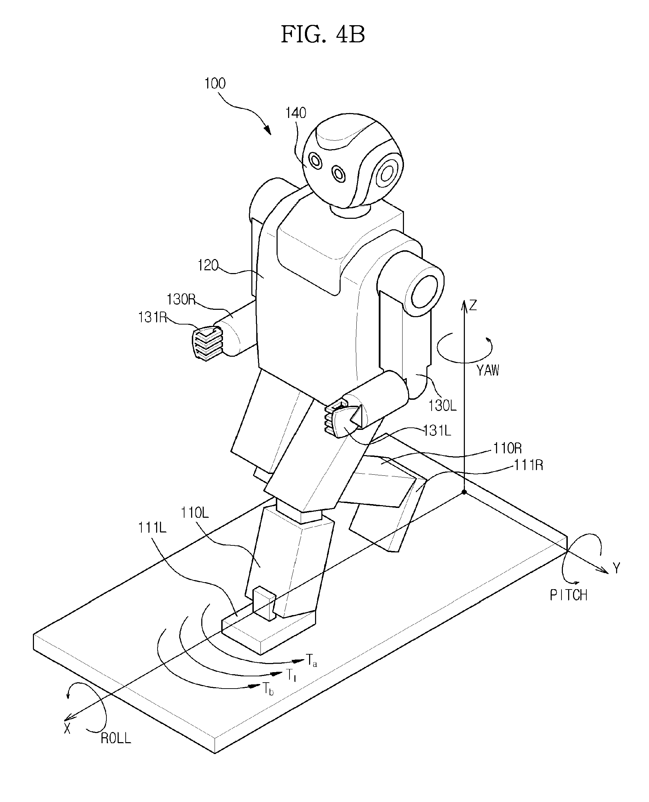

FIGS. 4A and 4B are views illustrating yaw moments generated during walking of the robot 100 in accordance with the embodiment. An O-XYZ coordinate system represents respective axes in the roll, pitch, and yaw directions in an absolute coordinate system.

The robot 100 may start walking through motions of joints of only a lower body thereof, which are designed in advance. Thereafter, motions of an upper body of the robot 100 may be controlled such that a yaw moment generated from a foot (111L of FIGS. 4A and 4B) contacting the ground is less than the maximum static frictional force of the ground. Here, the lower body of the robot 100 may include the legs 110R and 110L and the feet 111R and 111L, and the upper body of the robot 100 may include the arms 130R and 130L, the hands 131R and 131L, and the torso 120. For easier understanding, the torso 120 is regarded as including the head 140, for example.

As shown in FIGS. 4A and 4B, a yaw moment may be applied to the foot 111L stretched forward and contacting the ground during walking. Here, on the assumption that the generated yaw moment is referred to as "T", and the yaw moment T applied to the foot 111L contacting the ground is calculated by Equation 1 below.

Equation 1

$$T = T_b + T_l + T_a = m_b d_l \ddot{x}_b + 2 m_l d_l \ddot{x}_l + m_a (d_l + d_a) \ddot{x}_{a1} + m_a (d_a - d_l) \ddot{x}_{a2}$$

Here, Tb is a yaw moment generated from the torso 120, Tl is a yaw moment generated from the leg 110R and the foot 111R (hereinafter, a leg and a foot are referred to as "a leg unit"), moving from the rear to the front, and Ta is a yaw moment generated from the arm 130R or 130L and the hand 131R or 131L (hereinafter, an arm and a hand are referred to as "an arm unit"). Further, mb, ml, and ma are weights of the torso 120, the leg unit 110R and 111R located at the rear, and the arm unit 130R and 131R or 130L and 131L, dl is a distance between the center of the torso 120 and the center of the foot 111L contacting the ground in a direction (of the y-axis) perpendicular to a forward moving direction (of the x-axis), da is a distance between the center of the arm unit 130R and 131R or 130L and 131L and the center of the torso 120 in the direction perpendicular to the forward moving direction, and $\ddot{x}_b$, $\ddot{x}_l$, $\ddot{x}_{a1}$, and $\ddot{x}_{a2}$ are an acceleration of the center of gravity of the torso 120 in the forward moving direction, an acceleration of the center of gravity of the leg unit 110R and 111R moving from the rear to the front in the forward moving direction, an acceleration of the center of gravity the right arm unit 130R and 131R in the forward moving direction, and an acceleration of the center of gravity of the left arm unit 130L and 131L in the forward moving direction.

With reference to Equation 1, when the robot 100 walks, the yaw moment T generated from the foot 111L stretched forward, i.e., in the acceleration direction, and contacting the ground is the sum of the yaw moment Tb generated by acceleration of the torso 120 in the forward moving direction, the yaw moment Tl generated by acceleration of the leg unit 110R and 111R moving from the rear to the front, and the yaw moment Ta generated by acceleration of the arm 130R and 131R or 130L and 131L.

The yaw moment Tb generated from the torso 120 is equal to a value obtained by multiplication of the weight mb of the torso 120, the distance dl between the center of the torso 120 and the center of the foot 111L contacting the ground in the direction (of the y-axis) perpendicular to the forward moving direction (of the x-axis), and the acceleration $\ddot{x}_b$ of the center of gravity of the torso 120 in the forward moving direction. The yaw moment Tl generated from the leg unit 110R and 111R moving from the rear to the front is equal to a value obtained by multiplication of the weight ml of the leg unit 110R and 111R, the distance 2dl between the center of the torso 120 and the center of the foot 111L contacting the ground in the direction (of the y-axis)

perpendicular to the forward moving direction (of the x-axis), and the acceleration xl of the center of gravity of the leg unit 110R and 111R in the forward moving direction. The yaw moment Ta2 generated from the left arm unit 130L and 131L is equal to a value obtained by multiplication of the weight ma of the left arm unit 130L and 131L, the distance da-dl between the center of the left arm unit 130L and 131L and the center of the foot 111L contacting the ground in the direction (of the y-axis) perpendicular to the forward moving direction (of the x-axis), and the acceleration of the center of gravity of the left arm unit 130L and 131L in the forward moving direction. The yaw moment Ta1 generated from the right arm unit 130R and 131R is equal to a value obtained by multiplication of the weight ma of the right arm unit 130R and 131R, the distance da+dl between the center of the right arm unit 130R and 131R and the center of the foot 111L contacting the ground in the direction (of the y-axis) perpendicular to the forward moving direction (of the x-axis), and the acceleration $\ddot{x}_{a1}$ of the center of gravity of the right arm unit 130R and 131R in the forward moving direction. Further, the yaw moment T generated from the foot 111L contacting the ground is zero.

As the yaw moment T generated from the foot 111L stretched forward and contacting the ground during walking of the robot 100 is closer to zero, stability in walking of the robot 100 is more improved. However, only if the yaw moment T is less than the maximum static frictional force Tfriction of the ground, as stated in Equation 2 below, the robot 100 may walk upright without sliding.

Equation 2

$$T < T\text{friction}$$

Further, Equation 3 below is obtained by substituting Equation 1 into Equation 2.

Equation 3

$$m_b d_l \ddot{x}_b + 2 m_l d_l \ddot{x}_l + m_a (d_l + d_a) \ddot{x}_{a1} + m_a (d_a - d_l) \ddot{x}_{a2} < T_{friction}$$

Here, mb, ml, ma, dl, and da are constants according to shapes of the robot 100, and $\ddot{x}_b$ and $\ddot{x}_l$ are calculated from a walking motion trajectory. That is, the control unit 70 actively calculates values of $\ddot{x}_b$ and $\ddot{x}_l$ when the walking motion trajectory is set. Therefore, the value of the yaw moment T may be minimized by adjusting the remaining variables $\ddot{x}_{a1}$ and $\ddot{x}_{a2}$.

Each of $\ddot{x}_{a1}$ and $\ddot{x}_{a2}$ is determined by a swing pattern obtained by a combination of a forward motion and a backward motion of the right arm unit 130R and 131R or the left arm unit 130L and 131L. Therefore, if a motion of the arm unit 130R and 131R or 130L and 131L determining the value of one of $\ddot{x}_{a1}$ and $\ddot{x}_{a2}$ is set, the value of the yaw moment T may be adjusted using the value of the other one of $\ddot{x}_{a1}$ and $\ddot{x}_{a2}$ as a variable. For example, if the value of $\ddot{x}_{a1}$ representing the acceleration of the right arm unit 130R and 131R is set, the value of the yaw moment T is decreased by adjusting only the value of $\ddot{x}_{a2}$ representing the acceleration of the left arm unit 130L and 131L.

The main controller 71 adjusts the value of the yaw moment T so as to satisfy Equation 3. The main controller 71 first sets a motion of one of the right arm unit 130R and 131R and the left arm unit 130L and 131L, and then adjusts the value of the yaw moment T by controlling the acceleration of the other one of the right arm unit 130R and 131R and the left arm unit 130L and 131L. When the main controller 71 adjusts the value of the yaw moment T, the main controller 71 adjusts the acceleration of the right arm unit 130R and 131R or the left arm unit 130L and 131L such that the value of the yaw moment T is less than the predetermined maximum static frictional force Tfriction of the ground. The main controller 71 may adjust the acceleration of the right arm unit 130R and 131R or the left arm unit 130L and 131L such that the value of the yaw moment T is within a designated range (A<T<B<Tfriction) less than the maximum static frictional force Tfriction.

Further, the main controller 71 may adjust the value of the yaw moment T so as to be less than a value obtained by multiplication of the maximum static frictional force Tfriction and a constant Kmargin, as stated in Equation 4 below.

Equation 4

$$m_b d_l \ddot{x}_b + 2 m_l d_l \ddot{x}_l + m_a\left(d_l + d_a\right)\ddot{x}_{a1} + m_a\left(d_a - d_l\right)\ddot{x}_{a2} < K_{m\arg in} \cdot T_{friction}$$

Here, Kmargin has a value between 0 and 1, and Equation 4 is used to reduce the yaw moment T, if the predetermined maximum static frictional force is reduced through multiplication of Kmargin. The main controller 71 first sets a motion of one of the right arm unit 130R and 131R and the left arm unit 130L and 131L, and then adjusts the value of the yaw moment T by controlling an acceleration of the other one of the right arm unit 130R and 131R and the left arm unit 130L and 131L. The control unit 70 may adjust the acceleration of the right arm unit 130R and 131R or the left arm unit 130L and 131L such that the value of the yaw moment T is within a designated range (C<T<D< Kmargin · Tfriction) less than Kmargin · Tfriction.

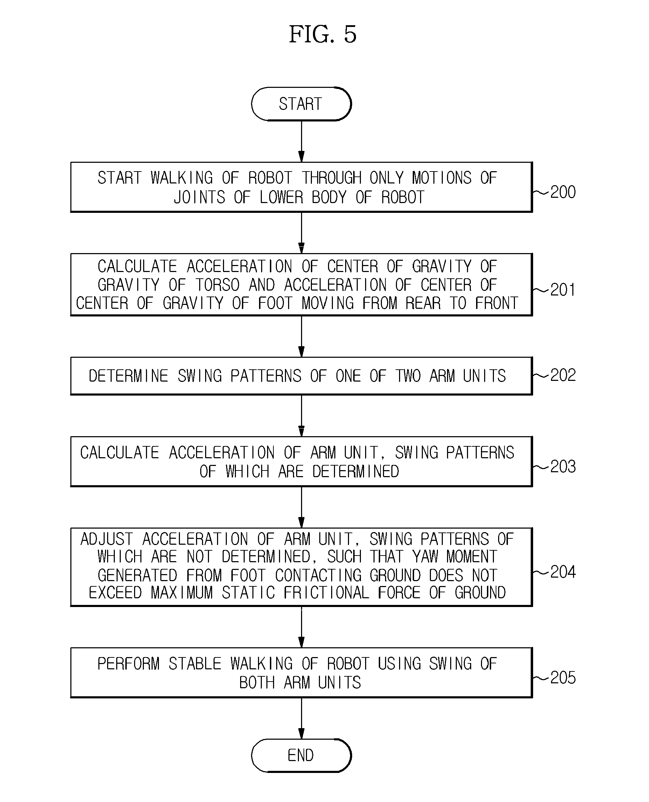

FIG. 5 is a flow chart illustrating a process of removing a yaw moment generated from a foot contacting the ground during walking of the robot 100 in accordance with the embodiment.

As shown in FIG. 5, when walking of the robot 100 is started, the main controller 71 may start the walking of the robot 100 through only motions of joints of the lower body of the robot 100. That is, the main controller 71 may start the walking of the robot 100 using the joints of the lower body of the robot 100, motion trajectories of which are designed in advance according to walking patterns, and then may adjust motions of the upper body of the robot 100 so as to compensate for a yaw moment generated from the lower body of the robot 100, as will be described later (operation 200).

Thereafter, the main controller 71 may calculate an acceleration of the center of gravity of the torso 120 and an acceleration of the center of gravity of the leg unit 110R and 111R or 110L and 111L moving from the rear to the front. Here, the acceleration of the center of gravity of the torso 120 and the acceleration of the center of gravity of the leg unit 110R and 111R or 110L and 111L moving from the rear to the front means relative accelerations, which are calculated relative to the foot 111L or 111R stretched forward and contacting the ground. The main controller 71 may adjust motion patterns of the torso 120 and the leg unit 110R and 111R or 110L and 111L, and thus detects accelerations of respective material points. Therefore, the main controller 71 may calculate accelerations of the center of gravity of the torso 120 and the center of gravity of the leg unit 110R and 111R or 110L and 111L relative to the foot 111L or 111R stretched forward and contacting the ground during walking of the robot 100 (operation 201).

Of course, acceleration sensors (not shown) may be installed on units of the robot 100, such as legs or arms, and the above control may be achieved by measuring accelerations of the respective units.

Thereafter, the main controller 71 may determine swing patterns of one of the two arm units 130R and 131R and 130L and 131L. The swing patterns mean motion patterns of the elbow joint and the wrist joint (operation 202).

Thereafter, the main controller 71 calculates an acceleration of the arm unit 130R and 131R or 130L and 131L, the swing patterns of which are determined. Here, the acceleration of the arm unit 130R and 131R or 130L and 131L means relative accelerations, which are calculated relative to the center of the foot 111L or 111R stretched forward and contacting the ground. The main controller 71 already detects motions, such as joint angles of the arm unit 130R and 131R or 130L and 131L, the swing patterns of which are determined, and thus may calculate the acceleration of the arm unit 130R and 131R or 130L and 131L relative to the foot 111L or 111R contacting the ground (operation 203).

Thereafter, the main controller 71 may adjust an acceleration of the arm unit 130R and 131R or 130L and 131L, swing patterns of which are not determined, so as to calculate the yaw moment T satisfying Equation 3 or Equation 4 below (operation 204).

Equation 3

$$m_b d_l \ddot{x}_b + 2m_l d_l \ddot{x}_l + m_a (d_l + d_a) \ddot{x}_{a1} + m_a (d_a - d_l) \ddot{x}_{a2} < T_{friction}$$

or,

Equation 4

$$m_b d_l \ddot{x}_b + 2m_l d_l \ddot{x}_l + m_a (d_l + d_a) \ddot{x}_{a1} + m_a (d_a - d_l) \ddot{x}_{a2} < K_{margin} \cdot T_{friction}$$

Thereafter, the main controller 71 may determine swing patterns of the arm unit 130R and 131R or 130L and 131L according to the acceleration of the arm unit 130R and 131R or 130L and 131L adjusted in operation 204, and enables the arm unit 130R and 131R or 130L and 131L to swing according to the determined swing patterns such that the yaw moment T generated from the foot 111L or 111R contacting the ground is less than the maximum static frictional force Tfriction, thereby allowing the robot 100 to walk without sliding (operation 205).

Although this embodiment illustrates that the yaw moment T generated from the foot 111L or 111R contacting the ground is less than the maximum static frictional force Tfriction by adjusting the acceleration of the arm unit 130R and 131R or 130L and 131L, the yaw moment T generated from the foot 111L or 111R contacting the ground may be controlled by adjusting the acceleration of the torso 120.

The embodiments can be implemented in computing hardware (computing apparatus) and/or software, such as (in a non-limiting example) any computer that can store, retrieve, process and/or output data and/or communicate with other computers. The results produced can be displayed on a display of the computing hardware. A program/software implementing the embodiments may be recorded on a computer-readable media, e.g., a non-transitory or persistent computer-readable medium. The program/software implementing the embodiments may also be transmitted over a transmission communication path, e.g., a network implemented via hardware. Examples of the non-transitory or persistent computer-readable media include a magnetic recording apparatus, an optical disk, a magneto-optical disk, and/or a semiconductor memory (for example, RAM, ROM, etc.). Examples of the magnetic recording apparatus include a hard disk device (HDD), a flexible disk (FD), and a magnetic tape (MT). Examples of the optical disk include a DVD (Digital Versatile Disc), a DVD-RAM, a CD-ROM (Compact Disc - Read Only Memory), and a CD-R (Recordable)/RW.

As is apparent from the above description, in a robot and a control method thereof in accordance with one embodiment, a yaw moment generated from a foot of the robot during walking is adjusted to be less than the maximum static frictional force of the ground, thereby achieving stable walking of the robot.

Although a few embodiments have been shown and described, it would be appreciated by those skilled in the art that changes may be made in these embodiments without departing from the principles and spirit of the invention, the scope of which is defined in the claims and their equivalents.

**Claims**

1.  A control method of a robot having an upper body and a lower body, comprising:

    starting walking of the robot through only a motion of the lower body; and
    adjusting a motion of the upper body such that a yaw moment generated from the lower body during walking of the robot is less than the maximum static frictional force of a ground.

2.  The control method according to claim 1, wherein:

    the lower body includes at least two leg units, each of the at least two leg units comprising a leg and a foot, and the walking of the robot is achieved through only the motion of the lower body by operating the at least two leg units; and
    the yaw moment is a moment of inertia generated from the foot contacting the ground during walking of the robot.

3.  The control method according to claim 2, wherein:

    the upper body includes a torso and at least two arm units, each of the at least two arm units including an arm and a hand; and
    the yaw moment is generated by motions of the torso, the at least two arm units, and the leg unit not contacting the ground.

4.  The control method according to claim 3, wherein an acceleration of the torso in a walking direction or accelerations of the at least two arm units in the walking direction are adjusted such that the yaw moment generated during walking of the robot is less than the maximum static frictional force of the ground.

5.  The control method according to claim 4, wherein, in the adjustment of the accelerations of the at least two arm units such that the yaw moment generated during walking of the robot is less than the maximum static frictional force of the ground, the acceleration of the torso in the walking direction and the acceleration of one of the at least two arm units in the walking direction are determined in advance, and then the acceleration of the other one of the at least two arm units, the acceleration of which is not determined, is adjusted such that the yaw moment is less than the maximum static frictional force of the ground.

6.  The control method according to any of claims 1-5, wherein, in the adjustment of the motion of the upper body such that the yaw moment is less than the maximum static frictional force of the ground, the motion of the upper body is adjusted such that the yaw moment is within a reference range less than the maximum static frictional force of the ground.

7.  A robot having an upper body and a lower body, comprising:

    a main controller to start walking of the robot through only motions of joints of the lower body, and to adjust a motion of the upper body such that a yaw moment generated from the lower body during walking of the robot is less than the maximum static frictional force of a ground; and
    sub controllers to drive actuators of the joints according to a control signal of the main controller to perform the walking of the robot.

8.  The robot according to claim 7, wherein:

    the lower body includes at least two leg units, each of the at least two leg units including a leg and a foot; and
    the main controller adjusts the motion of the upper body such that the yaw moment generated from the foot contacting the ground during walking of the robot does not exceed the maximum static frictional force of the ground.

9.  The robot according to claim 8, wherein:

    the upper body includes a torso and at least two arm units, each of the at least two arm units including an arm and a hand; and
    the main controller adjusts a yaw moment generated from the torso or yaw moments generated from the at least two arm units such that the yaw moment generated from the foot contacting the ground during walking of the robot does not exceed the maximum static frictional force of the ground.

10. The robot according to claim 9, wherein the main controller adjusts the yaw moment generated from the foot contacting the ground by adjusting an acceleration of the torso in a walking direction or accelerations of the at least two arm units in the walking direction.

11. The robot according to claim 9, wherein the main controller adjusts the yaw moment generated from the foot contacting the ground by determining the acceleration of the torso in the walking direction and the acceleration of one of the at least two arm units in the walking direction in advance, and then by adjusting the acceleration of the other one of the at least two arm units, the acceleration of which is not determined.

12. A control method of a robot having an upper body and a lower body, comprising:

starting movement of the robot through a motion of the lower body; and
adjusting a motion of the upper body such that a yaw moment generated from the lower body during movement of the robot is less than the maximum static frictional force of the ground.

13. A robot having an upper body and a lower body, comprising:

a main controller to start movement of the robot through motions of joints of the lower body, and to adjust a motion of the upper body such that a yaw moment generated from the lower body during the movement of the robot is less than the maximum static frictional force of a ground; and
sub controllers to drive actuators of the joints according to a control signal of the main controller to perform the movement of the robot.

14. The control method according to claim 12 and/or the robot according to claim 13, wherein the method according to any of claims 1-6 and/or the robot according to any of claims 7-11 is used.

15. At least one non-transitory computer-readable medium storing computer-readable instructions to control at least one processor to implement the method of claim 12.

FIG. 1

FIG. 2

FIG. 3

EP 2 343 230 A1

FIG. 4A

13

# FIG. 4B

# FIG. 5

```
                    ┌─────────┐
                    │  START  │
                    └─────────┘
                         │
                         ▼
┌──────────────────────────────────────────────────┐
│  START WALKING OF ROBOT THROUGH ONLY MOTIONS OF   │ ~200
│         JOINTS OF LOWER BODY OF ROBOT             │
└──────────────────────────────────────────────────┘
                         │
                         ▼
┌──────────────────────────────────────────────────┐
│    CALCULATE ACCELERATION OF CENTER OF GRAVITY OF │
│   GRAVITY OF TORSO AND ACCELERATION OF CENTER OF  │ ~201
│ CENTER OF GRAVITY OF FOOT MOVING FROM REAR TO FRONT│
└──────────────────────────────────────────────────┘
                         │
                         ▼
┌──────────────────────────────────────────────────┐
│  DETERMINE SWING PATTERNS OF ONE OF TWO ARM UNITS │ ~202
└──────────────────────────────────────────────────┘
                         │
                         ▼
┌──────────────────────────────────────────────────┐
│  CALCULATE ACCELERATION OF ARM UNIT, SWING PATTERNS│ ~203
│          OF WHICH ARE DETERMINED                  │
└──────────────────────────────────────────────────┘
                         │
                         ▼
┌──────────────────────────────────────────────────┐
│  ADJUST ACCELERATION OF ARM UNIT, SWING PATTERNS OF│
│   WHICH ARE NOT DETERMINED, SUCH THAT YAW MOMENT  │ ~204
│    GENERATED FROM FOOT CONTACTING GROUND DOES NOT │
│  EXCEED MAXIMUM STATIC FRICTIONAL FORCE OF GROUND │
└──────────────────────────────────────────────────┘
                         │
                         ▼
┌──────────────────────────────────────────────────┐
│  PERFORM STABLE WALKING OF ROBOT USING SWING OF   │ ~205
│                BOTH ARM UNITS                     │
└──────────────────────────────────────────────────┘
                         │
                         ▼
                    ┌─────────┐
                    │   END   │
                    └─────────┘
```

15

Europäisches
Patentamt

European
Patent Office

Office européen
des brevets

**EUROPEAN SEARCH REPORT**

Application Number

EP 11 15 0585

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>A | EP 1 642 687 A1 (HONDA MOTOR CO LTD [JP])<br>5 April 2006 (2006-04-05)<br>* paragraph [0016] - paragraph [0030] *<br>* paragraphs [0152] - [0154] *<br>* paragraph [0268] *<br>* paragraph [0608] *<br>----- | 1-3,7-9,<br>12-15<br>4-6,10,<br>11 | INV.<br>B62D57/032 |
| A | US 2005/033475 A1 (KUROKI YOSHIHIRO [JP]<br>ET AL) 10 February 2005 (2005-02-10)<br>* the whole document *<br>----- | 1-15 | |
| A | EP 1 486 298 A1 (SONY CORP [JP]; YAMAGUCHI<br>JINICHI [JP])<br>15 December 2004 (2004-12-15)<br>* the whole document *<br>----- | 1-15 | |
| A | EP 1 842 628 A1 (HONDA MOTOR CO LTD [JP])<br>10 October 2007 (2007-10-10)<br>* the whole document *<br>----- | 1-15 | |
| | | | **TECHNICAL FIELDS<br>SEARCHED (IPC)**<br><br>B62D |

The present search report has been drawn up for all claims

| Place of search | Date of completion of the search | Examiner |
|---|---|---|
| Munich | 3 May 2011 | Mingrino, Alessandra |

EPO FORM 1503 03.82 (P04C01)

## ANNEX TO THE EUROPEAN SEARCH REPORT
## ON EUROPEAN PATENT APPLICATION NO.

EP 11 15 0585

This annex lists the patent family members relating to the patent documents cited in the above-mentioned European search report.
The members are as contained in the European Patent Office EDP file on
The European Patent Office is in no way liable for these particulars which are merely given for the purpose of information.

03-05-2011

| Patent document cited in search report | | Publication date | Patent family member(s) | | Publication date |
|---|---|---|---|---|---|
| EP 1642687 | A1 | 05-04-2006 | EP | 1642688 A1 | 05-04-2006 |
| | | | EP | 1642689 A1 | 05-04-2006 |
| | | | EP | 2210713 A1 | 28-07-2010 |
| | | | EP | 2208582 A1 | 21-07-2010 |
| | | | EP | 2206582 A1 | 14-07-2010 |
| | | | EP | 2206583 A1 | 14-07-2010 |
| | | | EP | 2206584 A1 | 14-07-2010 |
| | | | WO | 2005000534 A1 | 06-01-2005 |
| | | | WO | 2005000535 A1 | 06-01-2005 |
| | | | WO | 2005000536 A1 | 06-01-2005 |
| | | | JP | 4155993 B2 | 24-09-2008 |
| | | | JP | 4126061 B2 | 30-07-2008 |
| | | | JP | 4181175 B2 | 12-11-2008 |
| | | | KR | 20060024362 A | 16-03-2006 |
| | | | KR | 20060024363 A | 16-03-2006 |
| | | | KR | 20060024372 A | 16-03-2006 |
| | | | US | 2006184276 A1 | 17-08-2006 |
| | | | US | 2006247799 A1 | 02-11-2006 |
| | | | US | 2006173578 A1 | 03-08-2006 |
| | | | US | 2010042256 A1 | 18-02-2010 |
| US 2005033475 | A1 | 10-02-2005 | NONE | | |
| EP 1486298 | A1 | 15-12-2004 | CN | 1649698 A | 03-08-2005 |
| | | | CN | 101745910 A | 23-06-2010 |
| | | | CN | 101763118 A | 30-06-2010 |
| | | | EP | 2298506 A1 | 23-03-2011 |
| | | | EP | 2305436 A1 | 06-04-2011 |
| | | | WO | 03078110 A1 | 25-09-2003 |
| | | | KR | 20100018103 A | 16-02-2010 |
| | | | US | 2005240307 A1 | 27-10-2005 |
| | | | US | 2011077775 A1 | 31-03-2011 |
| EP 1842628 | A1 | 10-10-2007 | CN | 101068663 A | 07-11-2007 |
| | | | WO | 2006064597 A1 | 22-06-2006 |
| | | | KR | 20070083835 A | 24-08-2007 |
| | | | US | 2008046123 A1 | 21-02-2008 |

EPO FORM P0459

For more details about this annex : see Official Journal of the European Patent Office, No. 12/82